(19) Europäisches Patentamt
European Patent Office
Office européen des brevets

(11) **EP 4 423 458 B1**

(12) **EUROPÄISCHE PATENTSCHRIFT**

(45) Veröffentlichungstag und Bekanntmachung des Hinweises auf die Patenterteilung:
**04.06.2025 Patentblatt 2025/23**

(21) Anmeldenummer: **23708717.6**

(22) Anmeldetag: **27.02.2023**

(51) Internationale Patentklassifikation (IPC):
**G01C 21/16** *(2006.01)* **G01C 25/00** *(2006.01)*

(52) Gemeinsame Patentklassifikation (CPC):
**G01C 21/188; G01C 21/165; G01C 25/005**

(86) Internationale Anmeldenummer:
**PCT/EP2023/054841**

(87) Internationale Veröffentlichungsnummer:
**WO 2023/198348 (19.10.2023 Gazette 2023/42)**

(54) **ÜBERWACHUNG UND DETEKTION VON SENSORFEHLERN IN INERTIAL-MESS-SYSTEMEN**

MONITORING AND DETECTION OF SENSOR FAULTS IN INERTIAL MEASUREMENT SYSTEMS

SURVEILLANCE ET DETECTION DE FAUTES DE CAPTEURS DANS DES SYSTEMES DE MESURE INTERTIELLE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **12.04.2022 DE 102022001242**

(43) Veröffentlichungstag der Anmeldung:
**04.09.2024 Patentblatt 2024/36**

(73) Patentinhaber: **Mercedes-Benz Group AG**
**70372 Stuttgart (DE)**

(72) Erfinder:
• **KALKKUHL, Jens**
**71088 Holzgerlingen (DE)**
• **MUNTZINGER, Antje**
**71134 Aidlingen (DE)**

(74) Vertreter: **Novagraaf Group**
**Chemin de l'Echo 3**
**1213 Onex / Geneva (CH)**

(56) Entgegenhaltungen:
**DE-A1- 102021 004 103    US-A1- 2020 159 224**

**Beschreibung**

Die Erfindung betrifft ein Verfahren zur Erkennung von Fehlfunktionen in Inertialmesseinheiten gemäß dem Oberbegriff des Anspruchs 1.

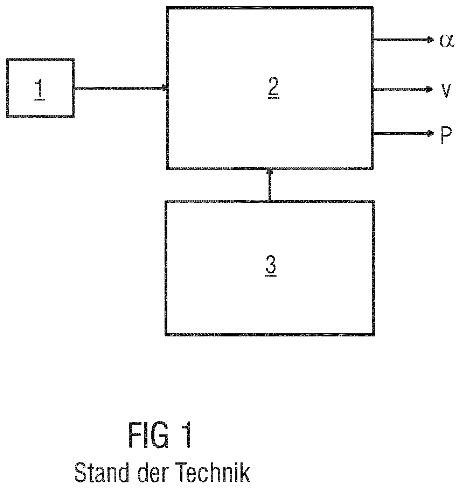

Inertialmesseinheiten (Inertial Measurement Units IMU) sind Anordnungen von Akzelerometern und Gyroskopen, die zur Messung der spezifischen Kräfte (specific forces, Beschleunigungen) und Drehgeschwindigkeiten von Körpern im Raum dienen. Inertialmesseinheiten spielen eine entscheidende Rolle bei der Schätzung des Bewegungszustandes von Fahrzeugen. Dieser Bewegungszustand wird in Fahrzeugregelsystemen, Fahrerassistenzsystemen und beim automatischen Fahren benötigt, zum Beispiel, um Information von Umfeldsensoren (Kamera, Lidar, Radar) richtig interpretieren zu können. Für Anordnungen und Verfahren zur Berechnung der Fahrzeugeigenbewegung aus den Daten der Inertialmesseinheit in Kombination mit zusätzlicher Fahrzeugsensorik hat sich der Begriff Vehicle Motion Observer (VMO) etabliert [5]. Eine solche Anordnung ist in Figur 1 dargestellt. In Figur 1 ist exemplarisch die Anwendung einer Inertialmesseinheit 1 zur Bewegungsschätzung und Navigation gemäß dem Stand der Technik gezeigt. Die Inertialmesseinheit 1 sendet Drehgeschwindigkeits-Signale aus den Gyroskopen und Specific-Force-Signale aus den Akzelerometern [9]. In einer Sensorfusionseinheit 2 werden durch Integration aus diesen Größen Bewegungsgrößen, beispielsweise Lagewinkel $\alpha$, Geschwindigkeit v und/oder Position P, berechnet und unter Zuhilfenahme weiterer Sensoren oder Sensoreinheiten 3, beispielsweise Odometer, Magnetometer, barometrische Höhenmesser, Lenkwinkel, Fahrzeugniveau und/oder GNSS-Empfänger, korrigiert. Im Folgenden soll das Ergebnis der beschriebenen Datenfusion als geschätzter Bewegungszustand bzw. abgekürzt als Bewegungschätzung bezeichnet werden. An Stellen, wo eine Verwechslung der Bewegung des Fahrzeugs mit Bewegung von Objekten im Umfeld des Fahrzeugs möglich ist, soll in Bezug auf das Fahrzeug von Eigenbewegungszustand bzw. von Eigenbewegungsschätzung gesprochen werden.

Von einer Fehlfunktion (englisch: fault) eines IMU-Sensors wird gesprochen, wenn im Sensor der spezifizierte (und somit per Design vorbestimmte) Zusammenhang zwischen der physikalischen Messgröße und dem ausgegebenen Sensorsignal verloren geht, so dass ein nicht spezifiziertes Messverhalten eintritt. Damit wird der betroffene IMU-Sensor unbrauchbar. Fehlfunktionen in den Sensoren, die sich undetektiert in die Bewegungsberechnung fortpflanzen, können dort zu beträchtlichen Fehlern oder grob falschen Werten in den Nutzsignalen führen und stellen daher ein Sicherheitsrisiko in sicherheitsrelevanten Anwendungen dar.

Fahrzeugregelsysteme, Fahrerassistenzsysteme und automatisches Fahren sind Anwendungen mit sehr hohen Sicherheitsanforderungen. Daher müssen Fehlfunktionen der IMU-Sensoren vom System automatisch detektiert, lokalisiert und der fehlerhafte Sensor innerhalb einer für das System vorgegeben Zeit (FTTI-fault tolerant time interval) aus der Bewegungsrechnung eliminiert werden zum Beispiel durch Umschalten auf einen redundanten Sensor (Backup).

In der hier betrachteten Klasse von IMU-Systemen für Automobilanwendungen (Automotive grade IMU) gibt es bereits elementare Überwachungsfunktionen, insbesondere bezüglich elektrischer Fehler. Diese Art der Überwachung wird im Folgenden als monolaterale Überwachung bezeichnet, weil der Überwachung die Informationen nur jeweils eines Sensors zugrunde gelegt werden. Monolaterale Verfahren weisen eine geringe Sensitivität auf und können nur Fehler mit relativ großer Amplitude erkennen, das heißt, die Überwachungsschwellen sind in der Regel zu hoch für Fahrerassistenzsysteme und automatisches Fahren. Die diagnostische Abdeckung für kleinere Fehler, die ebenfalls ein Sicherheitsrisiko darstellen können, ist gering. Die diagnostische Abdeckung kann durch Einführung von redundanten Sensorelementen wesentlich verbessert werden.

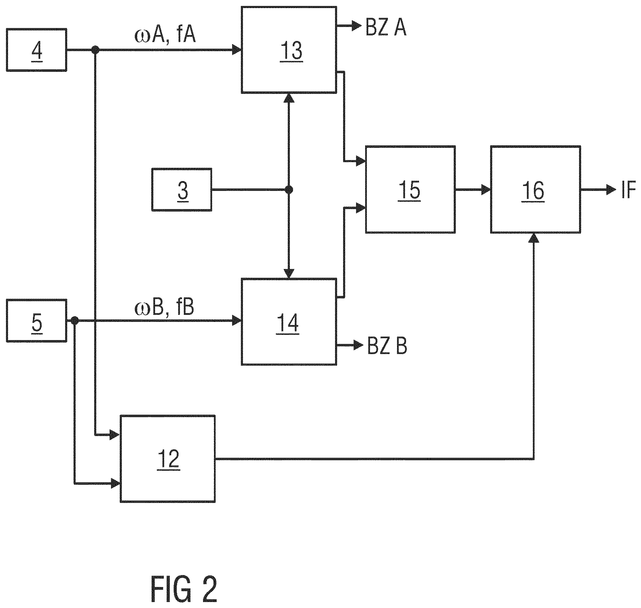

Eine Zusammenfassung des derzeitigen Standes der Technik für Sensoranordnungen mit einfacher Redundanz ist in [4] enthalten. Eine diesbezügliche Lösung ist in Figur 2 dargestellt. Dabei werden die beiden redundanten Inertialmesseinheiten 4 (IMU A) und 5 (IMU B) zunächst bezüglich ihrer systematischen Fehler (Bias, Sensitivität, Ausrichtungsfehler etc.) gegeneinander kalibriert und danach die so kalibrierten einander entsprechenden Sensorwerte einem Vergleich unterzogen. Wenn die Differenz der Messwerte einen Schwellwert überschreitet, dann ist eine Fehlfunktion in dem jeweiligen Sensoren-Paar wahrscheinlich. Die Fehlfunktion kann aber noch nicht einem der beiden Sensoren zugeordnet werden, weil hierfür eine zusätzliche Referenzgröße notwendig wäre. In [4] wird dieses Problem durch Überwachung der Innovationen der jeweiligen Kalmanfilter zur Schätzung der Eigenbewegung realisiert. Dadurch, dass in den beiden Kalmanfiltern die mit Hilfe der IMU prädizierten Bewegungszustände mit der restlichen Fahrzeugsensorik (Raddrehzahlen, Lenkwinkel) fusioniert werden und die Fahrzeugsensorik eine dritte unabhängige Informationsquelle darstellt, kann ein IMU-Fehler über Auswertung der Innovationen (welche eine gewichtete Differenz zwischen Prädiktion und Messung sind) lokalisiert werden. Ein Nachteil dieses Vorgehens besteht darin, dass die aus der Fahrzeugsensorik abgeleiteten Messgrößen sich im Wesentlichen auf die translatorischen Geschwindigkeiten beschränken und somit das in [4] beschriebene Überwachungsverfahren nicht in allen Bewegungsfreiheitsgraden der IMU gleich selektiv ist. So ist zum Beispiel die Sensitivität bezüglich Fehlfunktionen, die zu Abweichungen in den rotatorischen Freiheitsgraden führen, gering. Zusätzlich ist die Detektion von Fehlfunktionen mit kleiner Amplitude durch die Auflösung der Radgeschwindigkeitssensorik beschränkt. Insbesondere für eine Fusion des geschätzten Eigenbewegungszustands mit Umgebungsinformation wie sie bei der Objektverfolgung (object tracking) auftritt, gibt es teilweise höhere Anforderungen an die Erkennung von IMU-Fehlfunktionen mit kleineren Detektionsschwellen und kürzeren Fehlererkennungszeiten, die durch das beschriebene Verfahren unter Umständen nicht erfüllt werden können.

In [7] und [6] wird zwar der allgemeine Anspruch erhoben, dass Fehlfunktionen der Eigenbewegungsschätzung bei der Fusion von Umfeldsensoren erkannt werden können, aber die Quelle enthält keine spezifischen Ausführungsbeispiele hierzu. Außerdem konzentriert sich der Anspruch auf solche Fehlfunktionen, die generell zu physikalisch unplausiblen Informationen über den Bewegungszustand des Fahrzeugs führen. Es wird keine Aussage über solche Fehlfunktionen gemacht, bei denen der Bewegungszustand zwar physikalisch möglich, aber trotzdem falsch ist. Darüber hinaus enthält die dort vorgeschlagene Lösung keinerlei Redundanz bezüglich der Inertialmesseinheiten und bezüglich der Eigenbewegungsberechnung. Redundanz bezüglich Inertialsensorik ist aber notwendig für kurze Fehlererkennungszeiten und hohe Sensitivität der Fehlerdiagnose durch kleine Fehlerschwellen.

Aus dem Dokument [11] ist eine Korrektur einer aus Bilddaten eines Sensors ermittelten Position bekannt, wobei Information einer Inertialmesseinheit zum Bestimmen der Ausrichtung des Sensors verwendet werden.

Der Erfindung liegt die Aufgabe zu Grunde, ein neuartiges Verfahren zur Erkennung von Fehlfunktionen in Inertialmesseinheiten anzugeben.

Die Aufgabe wird erfindungsgemäß gelöst durch ein Verfahren mit den Merkmalen des Anspruchs 1.

Vorteilhafte Ausgestaltungen der Erfindung sind Gegenstand der Unteransprüche.

Ein erfindungsgemäßes Verfahren zur Erkennung von Fehlfunktionen in Inertialmesseinheiten, die in einem Fahrzeug zur Messung von Winkelgeschwindigkeiten und von Specific Forces verwendet werden, wobei zwei Inertialmesseinheiten mit jeweils mehreren Sensoren, umfassend Akzelerometer und gyroskopische Sensoren, zum Einsatz kommen, macht beispielsweise von einem Multi-Hypothesen-Ansatz Gebrauch.

Erfindungsgemäß wird eine erste Inertialmesseinheit als Master-Inertialmesseinheit verwendet, wobei eine zweite Inertialmesseinheit, deren Leistungsfähigkeiten geringer sein kann als die der ersten Inertialmesseinheit, als Slave-Inertialmesseinheit verwendet wird, wobei Messungen der Master-Inertialmesseinheit als Referenzwerte verwendet werden, um Messungen der Slave-Inertialmesseinheit über Schätzung von Fehlermodell-Parametern gegenüber der Master-Inertialmesseinheit zu kompensieren, um auf der Basis von jeweils zwei korrespondierenden Sensorsignalen der beiden Inertialmesseinheiten durch Vergleich eine Fehlfunktion zu erkennen, wobei diejenige der zwei Inertialmesseinheiten als fehlerhaft detektiert wird, deren in einem jeweils nachgeschalteten Kalmanfilter geschätzter Bewegungszustand in einer Objektverfolgungs-Einheit zu einer falschen Prädiktion der berechneten Positionen von Objekten in der Umgebung des Fahrzeugs führt.

In einer Ausführungsform wird ein Fehlerzustand aus einer Überwachungseinheit, der Sensorwerte der Inertialmesseinheiten zugeführt werden, an die Objektverfolgungs-Einheit übermittelt, so dass im Falle einer Fehlfunktion mehrere Hypothesen über den Bewegungszustand geprüft werden können, während in einem Normalbetrieb nur ein Bewegungszustand verwendet wird.

In einer Ausführungsform wird eine Eigenbewegung des Fahrzeugs durch eine Fahrzeugpose beschrieben und an die Objektverfolgungs-Einheit übermittelt.

In einer Ausführungsform werden in der Objektverfolgungs-Einheit aus den berechneten Hypothesen über die Fahrzeugpose und einer vorher berechneten Objektposition eines Objektes oder mehreren vorher berechneten Objektpositionen von Objekten eine neue Objektposition dieses Objektes oder die neuen Objektpositionen der Objekte in fahrzeugfesten Koordinaten vorhergesagt.

In einer Ausführungsform wird/werden die durch eine Umfeldsensorik des Fahrzeugs gemessene/n Objektposition/en eines oder mehrerer Objekte mit den über mittels der Kalmanfilter bestimmten Eigenbewegungs-Hypothesen des Fahrzeugs vorhergesagten Objektpositionen verglichen, wobei solche Eigenbewegungs-Hypothesen als falsch detektiert werden, deren zugehörige Abweichung zwischen vorhergesagter und gemessener Objektposition einen Schwellwert überschreitet.

In einer Ausführungsform wird im Falle einer Fehlfunktion in einer der Inertialmesseinheiten, wenn die Fehlfunktion durch Vergleich mit einem redundanten Sensor der anderen der Inertialmesseinheiten erkannt wurde und die mit einem fehlerhaften Sensorwert berechnete Eigenbewegungs-Hypothese als fehlerhaft zurückgewiesen wurde, auf die andere der Inertialmesseinheiten umgeschaltet.

In einer Ausführungsform werden die Ergebnisse der Überwachung der beiden Inertialmesseinheiten in eine Fehlerdetektion der Objektverfolgungs-Einheit einbezogen, wobei in diesem Fall nur dann eine Fehlfunktion erkannt wird, wenn die Abweichung der prädizierten Objektposition für eine der Hypothesen eine Schwelle überschreitet, für die andere jedoch nicht, und gleichzeitig ein Fehler über den Sensorvergleich einer IMU-Fehlerdetektionseinheit erkannt wurde.

In einer Ausführungsform wird/werden in die Fehlerdetektion nur ein als ortsfest erkanntes Objekt oder mehrere als ortsfest erkannte Objekte einbezogen. Eine Fehlfunktion wird für die Hypothese erkannt, bei der sich die prädizierte Objektposition stark verändert, während sie für die andere Hypothese örtlich konstant bleibt.

Die Erfindung nutzt die höhere Empfindlichkeit von Objektverfolgungsverfahren bezüglich Fehler in der Eigenbewegungsschätzung gezielt zur Fehlerdetektion aus und realisiert dadurch eine Detektion auch von IMU-Fehlfunktionen mit sehr kleiner Amplitude.

Ausführungsbeispiele der Erfindung werden im Folgenden anhand von Zeichnungen näher erläutert.

Dabei zeigen:

Fig. 1        eine schematische Ansicht eines typischen Beispiels der Anwendung einer Inertialmesseinheit (IMU) zur Schätzung der Bewegungsgrößen eines Fahrzeugs,

Fig. 2        eine schematische Darstellung einer Überwachung von IMU-Kanälen mit einfacher Redundanz,

Fig. 3        eine schematische Ansicht der erfindungsgemäßen Lösung inklusive der Auswertung und Fehlererkennung der Egomotion-Lösungen innerhalb der Objektverfolgung, und

Fig. 4A & 4B     eine schematische Darstellung zur Veranschaulichung der Grundidee der Erfindung im zweidimensionalen Raum.

Einander entsprechende Teile sind in allen Figuren mit den gleichen Bezugszeichen versehen.

Bei einem Verfahren zur Erkennung von Fehlfunktionen F in Inertialmesseinheiten mit einfacher Redundanz kommen zwei Inertialmesseinheiten 4 und 5 mit jeweils mehreren Akzelerometern und gyroskopischen Sensoren zum Einsatz, wie in Figur 2 gezeigt ist.

In den Abbildungen werden die zwei Inertialmesseinheiten 4 und 5 auch mit IMU A und IMU B bezeichnet. Jede von ihnen stellt einen Vektor $\vec{\omega}_{ib}^{b}$ mit drei Winkelgeschwindigkeits-Signalen und einen Vektor $\vec{f}_{ib}^{b}$ mit drei Specific-Force-Signalen bereit. Um die Darstellung dieser Signale zu vereinfachen, werden die Hochstellungen und Tiefstellungen weggelassen. Wir können dann auf die Sensorsignale als $\vec{\omega}_{A}$, $\vec{\omega}_{B}$ bzw. $\vec{f}_{A}$, $\vec{f}_{B}$ Bezug nehmen.

In Figur 2 wird eine erste Inertialmesseinheit 4 als Master-Inertialmesseinheit verwendet, wobei eine zweite Inertialmesseinheit 5, deren Leistungsfähigkeiten geringer sein kann als die der ersten Inertialmesseinheit 4, als Slave- bzw. Backup-Inertialmesseinheit verwendet wird, wobei in einer Überwachungseinheit 12 die Messungen der Master-Inertialmesseinheit 4 verwendet werden, um systematische Fehlerparameter in der Slave-Inertialmesseinheit 5 relativ zur Master-Inertialmesseinheit 4 in Modellen zu schätzen und Signalabweichungen zwischen den so kompensierten Signalen zu detektieren, wobei eine zu große Signalabweichungen durch eine potentielle Fehlfunktion F in einer der beiden Inertialmesseinheiten 4 oder 5 hervorgerufen werden kann. Allein aus der Detektion in der Überwachungseinheit 12 lässt sich jedoch nicht erkennen, welche der beiden Inertialmesseinheiten 4 oder 5 von einer Fehlfunktion F betroffen ist. Es lässt sich jedoch, erkennen, welches spezifische Sensorpaar betroffen ist.

Um den Bewegungszustand des Fahrzeugs zu berechnen, werden die Winkelgeschwindigkeitssignale $\vec{\omega}_{A}$, $\vec{\omega}_{B}$ und Spezific-Force-Signale $\vec{f}_{A}$, $\vec{f}_{B}$ jeder der beiden Inertialmesseinheiten 4, 5 je einem Kalmanfilter 13 und 14 (Vehicle Motion Observer, abgekürzt VMO) als Eingangsgrößen zur Verfügung gestellt und dort mit den Messgrößen anderer Fahrzeugsensoren, z.B. Radgeschwindigkeiten und Lenkwinkel, fusioniert, wobei jedes der beiden Kalmanfilter 13, 14 dieselben Messgrößen verwendet. Die Kalmanfilter 13, 14 bestimmen jeweils einen Bewegungszustand BZ A, BZ B für die jeweilige Inertialmesseinheit 4, 5. Wie aus Figur 1 ersichtlich ist, stellt die beschriebene Datenfusion von Signalen der Inertialmesseinheit 1 mit der restlichen Fahrzeugsensorik ein Standardverfahren zur Bestimmung der Bewegungsgrößen des Fahrzeugs dar.

Die in [4] als Stand der Technik vorgeschlagene Lösung sieht vor, entsprechend Figur 2 die Innovationen der beiden Kalmanfilter 13 und 14 in einer Monitoring-Einheit 15 zu überwachen und zusammen mit der aus der Überwachungseinheit 12 kommenden Information zur Fehlerdetektion IF in der Fehlerdetektionseinheit 16 zu verwenden

In der nachfolgenden Beschreibung werden folgende Formelzeichen verwendet:

| | |
|---|---|
| $t_0$ | Zeitpunkt |
| $\underline{u}$, $\underline{u}'$ | Fahrzeugpose geschätzt aus IMU und Fahrzeugsensorik |
| | Fahrzeug-Lagewinkel-Inkrement |
| | Fahrzeug-Positionsinkrement |
| $C(\Delta q_{eb}^{n})$ | aus dem Lagewinkel-Inkrement berechnete Drehmatrix |
| $\Delta q_{eb}^{n}$    $\Delta p_{eb}^{n}$    $H(u)$ | Homogene Transformation von erdfesten Koordinaten in fahrzeugfeste Koordinaten |
| $\underline{x}$ | Objekt-Position |
| $\underline{z}$ | Objekt-Positionsmessung durch Umfeldsensorik. |
| $K$ | Kalmanfilter-Verstärkung |
| $v$ | Innovation |
| $S$ | Messfehler-Kovarianzatrix |

(fortgesetzt)

| | |
|---|---|
| $P^-$ | Zustandsfehler-Kovarianzmatrix vor der Korrektur mit Messung (a-priori) |
| $R$ | Kovarianzmatrix der Messung |
| $\kappa$ | Schwellwert |
| $\Psi$ | Gierwinkel des Fahrzeugs bezüglich eines erdfesten Koordinatensystems |
| $\Delta\Psi$ | Gierwinkelinkrement |
| $\omega_z$ | Gierrate |
| $\delta\omega_z$ | Gierratenfehler |
| $v_x$ | Fahrzeuglängsgeschwindigkeit |
| $v_y$ | Fahrzeugquergeschwindigkeit |
| $\Delta t$ | Zeitintervall zwischen zwei Messungen |
| $l_r$ | Abstand fahrzeugfestes Koordinatensystem von der Hinterachse des Fahrzeugs. |

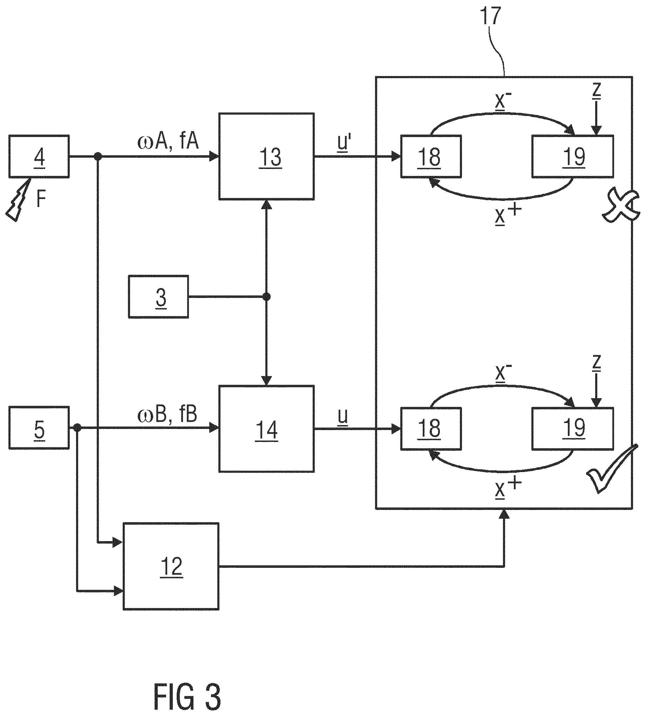

Im Unterschied zum Stand der Technik in Figur 2 werden erfindungsgemäß entsprechend Figur 3 die Ergebnisse der Berechnungen des Bewegungszustandes (richtige Fahrzeugpose $\underline{u}$ und unrichtige Fahrzeugpose $\underline{u}'$) des Fahrzeugs und die Information aus der Überwachungseinheit 12 der Objektverfolgungs-Einheit 17 zugeführt. Dort wird der Bewegungszustand in einem Vorhersageblock 18 zur Vorhersage der Position $\underline{x}^-$ der Objekte im Fahrzeugumfeld verwendet. Die vorhergesagten Positionen $\underline{x}^-$ werden dann in einer Korrektureinheit 19 für die Objekt-Position mit Objekt-Messungen $\underline{z}$ aus der Umfeldsensorik verglichen und entsprechend korrigiert (korrigierte Position $\underline{x}^+$ der Objekte im Fahrzeugumfeld). Bei Fehlfunktion F einer Inertialmesseinheit 4, 5 wird ein großer Fehler zwischen vorhergesagter Position $\underline{x}^-$ und gemessener oder korrigierter Position $\underline{x}^+$ auftreten. Dies wird dann in Kombination mit der unabhängigen IMU-Fehlerdetektion in der Überwachungseinheit 12 dazu verwendet, die IMU-Fehlfunktion F zu erkennen, zu lokalisieren (Zuordnung zur betreffenden IMU) und den IMU-Fehler gegebenenfalls durch Umschaltung auf die redundante Lösung, das heißt die jeweils fehlerfreie Inertialmesseinheit 4, 5, zu isolieren. Wenn keine der Inertialmesseinheiten 4, 5 eine Fehlfunktion F aufweist, dann wird eine gute Übereinstimmung zwischen vorhergesagter Position $\underline{x}^-$ und gemessener oder korrigierter Position $\underline{x}^+$ vorliegen.

Das Detektions-Problem wird gelöst, indem die beiden redundanten Eigenbewegungsschätzungen in die Objektverfolgungs-Einheit 17 weiter propagiert werden. Diese stehen dann dort als Hypothesen der Eigenbewegung des Fahrzeugs zur Verfügung.

Die Objektverfolgungs-Einheit 17 erhält gewöhnlich Daten bezüglich Objekte im Umfeld des Fahrzeugs aus unterschiedlichen Sensor-Quellen (z.B. Kamera, Radar, Lidar und Ultraschall). Diese Daten werden typischerweise fusioniert und über die Zeit verfolgt, um Objekt-Information zu extrahieren, die zeitliche Bewegung dieser Objekte zu verfolgen und ihre zukünftige Bewegung zu prädizieren. Zum Beispiel können so dynamische Objekte wie Fahrzeuge und Fußgänger nachverfolgt werden. Die Erkennung statischer Objekte, z.B. kleiner Hindernisse auf der Fahrbahn, ist ein anderes Beispiel für Aufgaben der Objektverfolgungs-Einheit 17.

Bei der Fusion von Objekten in der Fahrzeugumgebung muss die Eigenbewegung des Fahrzeugs kompensiert werden um die korrekte Position und Geschwindigkeit dieser Objekte berechnen zu können. Hierzu wird eine genaue und zuverlässige Bewegungsschätzung aus dem VMO 13 bzw. 14 als Eingang in die Objektverfolgungs-Einheit 17 verwendet. In der Objektverfolgungs-Einheit 17 dient der Eigenbewegungszustand zur Prädiktion der Position der umgebenden Objekte zwischen den Beobachtungen über die Umfeldsensorik. Ein fehlerhafter Eigenbewegungszustand führt dazu, dass die Position dieser Objekte falsch prädiziert wird. Zum Beispiel kann dies dazu führen, dass statische Objekte ihre Position von einem Beobachtungszeitpunkt zum nächsten ändern. Von diesem Effekt würden alle nachverfolgten statischen Objekte simultan betroffen sein. Dies führt nun zur Grundidee der Erfindung: Wenn für ein Objekt im Fahrzeugumfeld, das vorher als statisch klassifiziert wurde (z.B. eine Mauer), plötzlich eine Bewegung prädiziert wird, dann liegt wahrscheinlich eine Störung in der Bewegungsrechnung vor.

Die erfindungsgemäße Lösung besteht nun darin, für die zwei redundanten Inertialmesseinheiten 4 und 5 zwei Eigenbewegungsschätzungen in jeweiligen Kalmanfiltern 13, 14 oder VMO als Hypothesen zu berechnen. Gleichzeitig werden die Sensorwerte der Inertialmesseinheiten 4, 5 einer Überwachungseinheit 12 zugeführt. Wenn beide Inertialmesseinheiten 4, 5 fehlerfrei arbeiten, dann liefern sie ähnliche Sensorsignale mit Unterschieden, die unterhalb der Schwellen der Überwachungseinheit 12 liegen und die daraus berechneten Eigenbewegungszustände sind ebenfalls gleich und konsistent mit den von der Objektverfolgungs-Einheit 17 beobachteten Objekten im Fahrzeugumfeld. Tritt nun eine Fehlfunktion F in einem der IMU-Sensoren 4, 5 auf, so wird dieses Ereignis zum einen von der Überwachungseinheit 12 detektiert. Zum anderen sind die Hypothesen für den Fahrzeug-Eigenbewegungszustand nun unterschiedlich und die fehlerbehaftete Lösung führt zu einer Nichtübereinstimmung zwischen prädizierter und gemessener Position von Objekten. Andererseits wird der aus der fehlerfreien IMU berechnete fehlerfreie Bewegungszustand konsistent zu den beobachteten Objekten sein. Durch Kombination der beiden Verfahren lässt sich sowohl die fehlerbehaftete IMU 4, 5 als auch der Sensor mit der Fehlfunktion F eindeutig lokalisieren und das System kann auf die Backup-Lösung umschalten.

In einer Ausführungsform können die Bewegungszustände BZ A, BZ B, die aus den beiden redundanten Inertialmesseinheiten 4, 5 berechnet werden, der Objektverfolgungs-Einheit 17 zur Weiterverarbeitung zugeführt werden.

In einer Ausführungsform kann der Fehlerzustand aus der IMU-Überwachungseinheit 12, der durch Vergleich von korrespondierenden IMU-Sensoren der beiden Inertialmesseinheiten 4, 5 ermittelt wurde, der Objektverfolgungs-Einheit 17 zugeführt werden, so dass nur im Falle einer Fehlfunktion F beide Hypothesen zum Bewegungszustand geprüft werden müssen.

In einer Ausführungsform wird hierbei die Eigenbewegung des Fahrzeugs 22 durch eine Fahrzeugpose

$$\underline{u} = \begin{bmatrix} \Delta q_{eb}^n \\ \Delta p_b^n \end{bmatrix} \qquad (1)$$

beschrieben, wobei $\Delta q_{eb}^n$ das Lageinkrement (Winkelinkrement) des Fahrzeugs 22 relativ zu einem lokalen erdfesten (tangentialen) Koordinatensystem 20 mit den Achsen $x^n$ und $y^n$ und $\Delta p_b^n$ das Positionsinkrement des betreffenden Fahrzeugs 22 im erdfesten Koordinatensystem 20 ist. Bezeichnet nun $C(\Delta q_{eb}^n)$ die Drehmatrix, die sich aus dem Lageinkrement berechnen lässt, dann kann die gesamte Transformation (Drehung und Verschiebung) eines Objektes von erdfesten in fahrzeugfeste Koordinaten durch die, aus praktischen Anwendungen gut bekannte, homogene Matrix (Homogene Transformation von erdfesten Koordinaten in fahrzeugfeste Koordinaten.) aus [8, 10]

$$H(\underline{u}) = \begin{bmatrix} C^{-1}(\Delta q_{eb}^n) & -C^{-1}(\Delta q_{eb}^n)\Delta p_b^n \\ 0 & 1 \end{bmatrix} \qquad (2)$$

beschrieben werden.

In einer Ausführungsform können aus den beiden Zuständen für die FahrzeugEigenbewegung und vorherigen Objektpositionen prädizierte Werte für die Position von Objekten in der Fahrzeugumgebung berechnet werden. Bezeichnet $\Delta p_o^n$ die Position eines Objektes in erdfesten Koordinaten, so ist seine Position $\Delta p_o^b$ in fahrzeugfesten Koordinaten durch die Gleichung

$$\begin{bmatrix} \Delta p_o^b \\ 1 \end{bmatrix} = H(\underline{u}) \cdot \begin{bmatrix} \Delta p_o^n \\ 1 \end{bmatrix} \qquad (3)$$

gegeben. Hierbei ist $\Delta p_o^b$ die Position des Objektes, wie sie von einem fahrzeugfesten Umfeldsensor (Kamera, Lidar, Radar) relativ zum Fahrzeug 22 vermessen werden kann.

In einer Ausführungsform stellt die Objektposition

$$\underline{x} = \begin{bmatrix} \Delta p_o^n \\ 1 \end{bmatrix} \qquad (4)$$

des Objektes in erdfesten Koordinaten den Zustand des Objektes für die Objektverfolgung dar und

$$\underline{z} = \begin{bmatrix} \Delta p_o^b \\ 1 \end{bmatrix} \qquad (5)$$

ist die von der Umfeldsensorik gelieferte Messgröße (Objekt-Positionsmessung durch Umfeldsensorik), die in einem Kalmanfilter 13, 14 fusioniert werden muss, um das Objekt zu lokalisieren. Zur Vereinfachung wird hier angenommen, dass das Objekt bereits als statisch klassifiziert wurde. In diesem Fall muss $\underline{x}$ konstant sein und die Fusionsaufgabe im Kalmanfilter 13, 14 besteht in einer Korrektur (Innovation) des geschätzten Objektzustandes $\underline{\hat{x}}$ (der geschätzten Position des Objektes) mit Hilfe der Messung $\underline{z}$. Bezeichnet nun $\underline{z}_k$ eine Folge von Messungen des Objektes zu diskreten Zeitpunkten $k = 0, 1, 2, ...$ und sind $\underline{u}_k$ die zugehörigen Fahrzeugposen und $\underline{\hat{x}}_k^-$ die Schätzung der Objektposition vor der Korrektur (a-priori), dann findet die Korrektur auf eine verbesserte (a-posteriori) Positionsschätzung $\underline{\hat{x}}_k^+$ über die

Gleichung

$$\hat{\underline{x}}_k^+ = \hat{\underline{x}}_k^- + K \cdot \left(\underline{z}_k - H(\underline{u}_k)\hat{\underline{x}}_k^-\right) \qquad (6)$$

statt, wobei die Differenz zwischen der Messung und der, aus Fahrzeugeigenbewegung und a-priori Positionsschätzung bestimmten, vorhergesagten Messgröße als Innovation $\underline{v}_k$ bezeichnet wird [2, 3, 1]:

$$\underline{v}_k = \underline{z}_k - H(\underline{u}_k)\hat{\underline{x}}_k^- \qquad (7)$$

Laut Kalmanfilter-Theorie lässt sich die statistische Verteilung der Innovation über ihre Kovarianzmatrix

$$S_k = H(\underline{u}_k)P_k^- H^T(\underline{u}_k) + R_k \qquad (8)$$

berechnen wobei $P_k^-$ die Kovarianzmatrix des a-priori Zustands-Schätzfehlers und $R_k$ die Kovarianzmatrix des Messfehlers ist. Letztere enthält statistische Grundannahmen über die Genauigkeit (Fehlerverteilung) von Messfehler und Eigenbewegungsschätzung. Für jede Komponente $v_{ik}$ des Innovationsvektors $\underline{v}_k$ gilt dann die Abschätzung

$$|v_{ik}| < \kappa\sqrt{s_{iik}}, \quad \kappa = 3 \dots 4 \qquad (9)$$

Das heißt, die Differenz aus Messung und prädizierter Messung sollte kleiner sein als ein Vielfaches ihrer, durch das Diagonalelement $s_{iik}$ der Kovarianz gegebenen, Standardabweichung. (Wenn $\kappa = 3$ dann sollten im statistischen Mittel 99.73% der Innovationen im durch Gleichung (9) beschriebenen Bereich liegen. Bei $\kappa = 4$ wären es 99.994%). Ist dies nicht der Fall, liegt entweder ein Fehler in der Messung (Ausreißer) oder ein Fehler in der Prädiktion vor (z.B. durch falsch berechnete Eigenbewegung). Es seien nun $\underline{u}_k^A$ und $\underline{u}_k^B$ zwei Hypothesen für die Eigenbewegung, die auf den jeweiligen Inertialmesseinheiten A und B, 4 und 5 beruhen und $\hat{\underline{x}}_k^-$ die a-priori geschätzte Position eines als statisch klassifizierten Objektes im Fahrzeugumfeld. Führt nun eine Fehlfunktion F in IMU A, 4 und der daraus folgende Fehler in $\underline{u}_k^A$ dazu, dass für die Elemente der zugeordneten Innovation

$$\left|v_{ik}^A\right| > \kappa\sqrt{s_{iik}} \qquad (10)$$

gilt, aber für die Elemente der zur Hypothese $\underline{u}_k^B$ zugeordneten Innovation gilt

$$\left|v_{ik}^B\right| < \kappa\sqrt{s_{iik}} \qquad (11)$$

dann lässt sich die Hypothese A eindeutig als falsch detektieren und es liegt ein Fehler in der Eigenbewegung A vor. Auf diese Weise lässt sich dann ein vorher durch das IMU-Monitoring der Überwachungseinheit 12 erkannter Fehler eindeutig zu einer der beiden IMUs 4, 5 zuordnen.

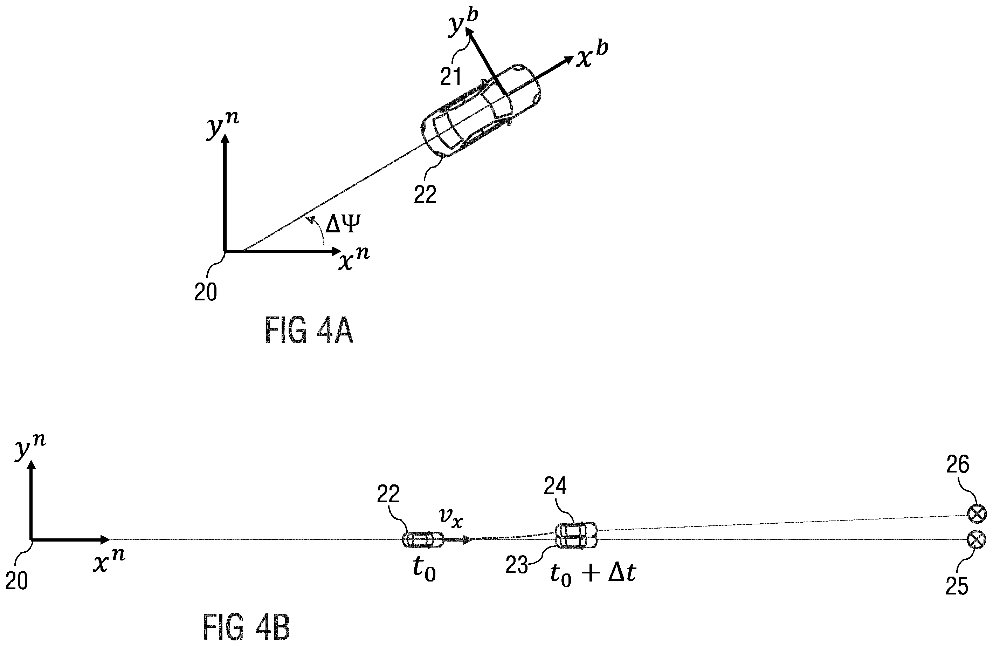

Ein einfaches Beispiel im zweidimensionalen Raum soll dieses Vorgehen nun anhand von Figur 4 veranschaulichen. Figur 4a zeigt für ein Fahrzeug 22 die Beziehung zwischen einem erdfesten Koordinatensystem 20 und einem fahrzeugfesten Koordinatensystem 21 mit den Achsen $x^b$ und $y^b$ im zweidimensionalen Raum. Der Gierwinkel $\Psi$ beschreibt dabei die Drehung zwischen den beiden Systemen. Die entsprechende Drehmatrix ist

$$C(\Psi) = \begin{bmatrix} cos\Psi & -\mathrm{sin}\Psi \\ \mathrm{sin}\Psi & \mathrm{cos}\Psi \end{bmatrix} \qquad (12)$$

Im in Figur 4b dargestellen Beispiel fährt ein Fahrzeug 22 mit konstanter Geschwindigkeit $v_x$ geradeaus auf ein direkt vor dem Fahrzeug 22 stehendes Objekt an der Objektposition 25 zu, die durch den Vektor

$$\underline{x} = \begin{bmatrix} x_o \\ 0 \\ 1 \end{bmatrix} \qquad (13)$$

beschrieben ist. Zum Zeitpunkt $t_0$ entsprechend dem diskreten Zeitpunkt $k = 0$ habe das Fahrzeug 22 ein Gierwinkelinkrement $\Delta\Psi_0 = 0$ und das Positionsinkrement

$$\Delta p_{b0}^n = \begin{bmatrix} 0 \\ 0 \end{bmatrix} \qquad (14)$$

Die Bewegung des Fahrzeugs 22 wird durch folgende drei Gleichungen beschrieben:

$$\Delta\dot{\Psi} = \omega_z \qquad (15)$$

$$\Delta\dot{x} = v_x\cos\Delta\Psi - v_y\sin\Delta\Psi \qquad (16)$$

$$\Delta\dot{y} = v_x\sin\Delta\Psi + v_y\cos\Delta\Psi \qquad (17)$$

Die Drehgeschwindigkeit $\omega_z$ wird in diesem Zusammenhang auch als Gierrate bezeichnet und wird über die Inertialmesseinheit 4, 5 gemessen. Die Geschwindigkeit $v_x$ ist die körperfeste Längsgeschwindigkeit des Fahrzeugs 22 die im VMO 13, 14 über Fusion der Raddrehzahlsensoren mit den IMU-Daten berechnet werden kann. Eine übliche Vereinfachung der Rechnung für das Beispiel besteht darin, dass sich die Quergeschwindigkeit des Fahrzeugs 22 aus der Gleichung

$$v_y \approx l_r\omega_z \qquad (18)$$

berechnet. Dabei ist $l_r$ der Abstand des Koordinatenursprungs des fahrzeugfesten Koordinatensystems 21 von der Hinterachse des Fahrzeugs 22. Man spricht von rein kinematischem Fahren. Bei reiner Geradeausfahrt des Fahrzeugs 22 ist $\omega_z = 0$. Daraus folgt, dass $\Delta\Psi = 0$ ist und eine Integration der Bewegungsgleichungen bis zum Zeitpunkt $t_1 = t_0 + \Delta t$ entsprechend diskreter Zeit $k = 1$ ergibt als neue Pose 23 $\underline{u}_1$ des Fahrzeugs 22

$$\Delta\Psi_1 = 0, \quad \Delta p_{b1}^n = \begin{bmatrix} v_x\Delta t \\ 0 \end{bmatrix} \qquad (19)$$

Folglich ergibt sich für die gemessene Position des Objektes in Fahrzeugkoordinaten

$$\underline{z}_1 = H(\underline{u}_1)\underline{x}_o = \begin{bmatrix} 1 & 0 & -v_x\Delta t \\ 0 & 1 & 0 \\ 0 & 0 & 1 \end{bmatrix} \cdot \begin{bmatrix} x_o \\ 0 \\ 1 \end{bmatrix} = \begin{bmatrix} x_o - v_x\Delta t \\ 0 \\ 1 \end{bmatrix} \qquad (20)$$

Tritt jetzt zum Zeitpunkt $t_0$ ein konstanter Biasfehler $\delta\omega_z$ im Gierratensensor der IMU auf, dann wird vom Sensor statt der realen Gierrate $\omega_z = 0$ die fehlerhafte Gierrate

$$\omega_z = 0 + \delta\omega_z \qquad (21)$$

gemessen. Integration der Gleichung (15) führt dann am Zeitpunkt $t_1$ auf den falschen Gierwinkel

$$\Delta\Psi_1 = \delta\omega_z \cdot \Delta t \qquad (22)$$

Dieser Fehler pflanzt sich in die Positionsberechnung fort und führt zu einer falsch berechneten Pose 24 des Fahrzeugs 22. Zu Demonstrationszwecken nehmen wir an, dass der Gierwinkelfehler klein ist und für trigonometrische Funktionen die Winkelnäherungen

$$\sin\Delta\Psi \approx \Delta\Psi, \quad \cos\Delta\Psi \approx 1 \qquad (23)$$

gelten. Mit dieser Näherung lässt sich die durch die Gierratenstörung entstehende fehlerhafte Position analytisch durch Integration der Gleichungen (16) und (17) berechenen. Man erhält

$$\Delta p_{b1}^n = \begin{bmatrix} v_x \Delta t - \frac{1}{2} l_r \Delta\Psi_1^2 \\ \left(\frac{1}{2} v_x \Delta t + l_r\right) \Delta\Psi_1 \end{bmatrix} \tag{24}$$

Mit der aus der Kleinwinkelnäherung gewonnenen Drehmatrix

$$C(\Delta\Psi_1) = \begin{bmatrix} 1 & -\Delta\Psi_1 \\ \Delta\Psi_1 & 1 \end{bmatrix} \tag{25}$$

kann dann die Matrix $H(\underline{u}_1)$ berechnet werden.

$$H(\underline{u}_1) = \begin{bmatrix} 1 & \Delta\Psi_1 & -\left(1 + \frac{1}{2}\Delta\Psi_1\right) \cdot v_x \Delta t - \frac{1}{2} l_r \Delta\Psi_1 \\ -\Delta\Psi_1 & 1 & \left(\frac{1}{2} v_x \Delta t - l_r\right) \Delta\Psi_1 - \frac{1}{2} l_r \Delta\Psi_1^3 \\ 0 & 0 & 1 \end{bmatrix} \tag{26}$$

Als Endergebnis erhält man für die Prädiktion der Messung aus der Fahrzeugeigenbewegung

$$\hat{z}_1^- = H(\underline{u}_1) \cdot \underline{x}_1^- = \begin{bmatrix} x_o - \left(1 + \frac{1}{2}\Delta\Psi_1^2\right) \cdot v_x \Delta t - \frac{1}{2} l_r \Delta\Psi_1^2 \\ \left(\frac{1}{2} v_x \Delta t - l_r - x_o\right) \cdot \Delta\Psi_1 - \frac{1}{2} l_r \Delta\Psi_1^3 \\ 1 \end{bmatrix} \tag{27}$$

Dieses Ergebnis lässt sich am besten durch ein Zahlenbeispiel illustrieren:

$$v_x = 30\frac{m}{s} \tag{28}$$

$$l_r = 1{,}5\text{m} \tag{29}$$

$$\delta\omega_z = 1\frac{\circ}{s} \tag{30}$$

$$x_o = 80\text{m} \tag{31}$$

$$\Delta t = 0{,}3\text{s} \tag{32}$$

Für den Fall der Gierrate ohne Fehlfunktion F ergibt sich die exakte Prädiktion der Messung

$$\hat{z}_1^- = \begin{bmatrix} 71\text{m} \\ 0 \\ 1 \end{bmatrix} \tag{33}$$

Für den Fall der Gierrate mit Fehlfunktion F erhält man

$$\hat{z}_1^- = \begin{bmatrix} 70{,}9999\text{m} \\ -0{,}4032\text{m} \\ 1 \end{bmatrix} \tag{34}$$

Das bedeutet, mit der falschen Eigenbewegung wird die Position des Objektes 25 in Fahrzeugkoordinaten in Bezug auf die *y*-Komponente um mehr als 0,4 m nach rechts verschoben vorhergesagt, während sich die gemessene Objektposition 26 bei Fehlfunktion F immer noch genau vor dem Fahrzeug 22 befindet. Beträgt nun die zugehörige Standardabweichung z.B. $\sqrt{s_{iik}} = 0.1\,\mathrm{m}$ , dann kann man die entsprechende Hypothese mit $\kappa = 3$ als falsch verwerfen.

In einer Ausführungsform können die beiden Hypothesen zu den prädizierten Positionen der Objekte mit den über die Umfeldsensorik gemessenen Objektposition 25, 26 verglichen werden. Wenn für eine der Hypothesen die Abweichung der gemessenen Objektposition 25, 26 gegenüber der prädizierten Objektposition 25, 26 einen Schwellwert überschreitet, für die andere Hypothese aber nicht, dann kann auf einen Fehler in der betreffenden Inertialmesseinheit 4, 5 geschlossen werden.

In einer Ausführungsform können die Ergebnisse der Überwachung der beiden IMU-Sensoren 4, 5 in die Fehlerdetektion der Objektverfolgungs-Einheit 17 einbezogen werden. In diesem Fall wird nur dann auf eine Fehlfunktion F erkannt, wenn die Abweichung der prädizierten Objektposition 25, 26 für eine der Hypothesen eine Schwelle überschreitet, für die andere jedoch nicht, und gleichzeitig ein Fehler über den Sensorvergleich der IMU-Fehlerdetektionseinheit 16 erkannt wurde.

In einer Ausführungsform können in die Fehlerdetektion nur ein als ortsfest erkanntes Objekt oder mehrere als ortsfest erkannte Objekte einbezogen werden und eine Fehlfunktion F für die Hypothese erkannt werden, bei der sich die prädizierte Objektposition 25, 26 stark verändert, während sie für die andere Hypothese örtlich konstant bleibt.

Die Erfindung ermöglicht eine fehlertolerante Bestimmung der Bewegungsgrößen eines Fahrzeugs 22 im Falle einer IMU-Fehlfunktion F (fail operational) mit einfacher Redundanz. Dabei werden keine speziellen Anforderungen an geometrische Anordnung und Sensorgüte gestellt. Vielmehr ist die Erfindung auch auf kostengünstige, heterogene und teilweise im Fahrzeug 22 schon vorhandene IMU-Hardware anwendbar.

Das erfindungsgemäße Verfahren erlaubt die Absicherung der Signale der Master-Inertialmesseinheit 4 gegen Sensorfehler als Maßnahme zur Sicherstellung der Funktionssicherheit (Fail-Operational) der Schätzung der Eigenbewegung eines Fahrzeugs unter Berücksichtigung erhöhter Sicherheitsanforderungen beim automatischen Fahren.

Der Schwerpunkt liegt dabei auf der Nutzung von heterogenen (nicht gleichartigen) und insbesondere an unterschiedlichen Stellen im Fahrzeug 22 eingebauten Inertialmesseinheiten (IMU) 4, 5.

Mit der erfindungsgemäßen Lösung wird Fehlertoleranz (fail operational) bei der Berechnung von Fahrzeugbewegungsgrößen erzielt. Dabei wird auf die in Fahrerassistenzsystemen und automatischen Fahrzeugen bereits vorhandenen Systeme und Verfahren zur Objektdetektion und Fusion zurückgegriffen.

Literaturverzeichnis

[1] Berman, Z. : Outliers Rejection in Kalman Filtering-Some New Observations. In: IEEE/ION Position, Location and Navigation Symposium - PLANS 2014, S. 1008-1013 9

[2] Grewal, M. S. ; Adrews, A. P.: Kalman Filtering. New York : John Wiley, 2001 9

[3] Groves, P. D.: Principles of GNSS, Inertial and Multisensor integrated Navigation systems. Artech House, 2013 9

[4] Kalkkuhl, J. ; Bergmann, M. ; Engelhardt, T. ; Bleimund, F. : DE 10 2021 004 103 A1*: Verfahren und Anordnung zur Überwachung und Detektion von Sensorfehlern in Inertial-Mess-Systemen* 3, 17

[5] Klier, W. ; Reim, A. ; Stapel, D. : Robust Estimation of Vehicle Sideslip Angle - An Approach w/o Vehicle and Tire Models. In: SAE Technical Paper Series (2008), Nr. 2008-01-0582 1

[6] Mercep, L. ; Pollach, M. : US10553044B2*: Self-diagnosis of faults with a secondary system in an autonomous driving system. 4*

[7] Mercep, L. ; Pollach, M. : US11145146B2*: Self-Diagnosis of Faults in an Autonomous Driving System 4*

[8] Rabe, C. : Detection of Moving Objects by Spatio-Temporal Motion Analysis, Christian-Albrechts-Universität Kiel, Diss., 2011 7

[9] Wendel, J. : Integrierte Navigationssysteme. Oldenbourg, 2007

[10] Woo, A. ; Fidan, B. ; Melek, W. W.: Localization for Autonomous Driving. In: Zekavat, S. A. (Hrsg.) ; Buehrer, R. M. (Hrsg.): Handbook of Position Localization. IEEE Press Wiley, Kapitel 29 7

[11] Brian K. Rupnik ; Brian T. Whitehead: US 2020/159224 A1:
*SYSTEMS AND METHODS OF ADJUSTING POSITION INFORMATION*

## Patentansprüche

1. Verfahren zur Erkennung von Fehlfunktionen (F) in Inertialmesseinheiten (4, 5), die in einem Fahrzeug (22) zur Messung von Winkelgeschwindigkeiten ($\vec{\omega}_A$, $\vec{\omega}_B$) und von Specific Forces ($\vec{f}_A$, $\vec{f}_B$) verwendet werden, wobei zwei Inertialmesseinheiten (4, 5) mit jeweils mehreren Sensoren, umfassend Akzelerometer und gyroskopische Sensoren, zum Einsatz kommen,
   wobei eine erste Inertialmesseinheit (4) als Master-Inertialmesseinheit verwendet wird, wobei eine zweite Inertialmesseinheit (5), deren Leistungsfähigkeiten geringer sein kann als die der ersten Inertialmesseinheit (4), als Slave-Inertialmesseinheit verwendet wird, wobei Messungen der Master-Inertialmesseinheit (4) als Referenzwerte verwendet werden, um Messungen der Slave-Inertialmesseinheit (5) über Schätzung von Fehlermodell-Parametern gegenüber der Master-Inertialmesseinheit (4) zu kompensieren, um auf der Basis von jeweils zwei korrespondierenden Sensorsignalen der beiden Inertialmesseinheiten (4, 5) durch Vergleich eine Fehlfunktion (F) zu erkennen,
   **dadurch gekennzeichnet, dass** diejenige der zwei Inertialmesseinheiten (4, 5) als fehlerhaft detektiert wird, deren in einem jeweils nachgeschalteten Kalmanfilter (13, 14) berechnete Bewegungsschätzung in einer Objektverfolgungs-Einheit (17) zu einer falschen Prädiktion der berechneten Positionen von Objekten in der Umgebung des Fahrzeugs (22) führt.

2. Verfahren nach Anspruch 1,
   **dadurch gekennzeichnet, dass** ein Fehlerzustand aus einer Überwachungseinheit (12), der Sensorwerte der Inertialmesseinheiten (4, 5) zugeführt werden, an die Objektverfolgungs-Einheit (17) übermittelt wird, so dass im Falle einer Fehlfunktion (F) mehrere Hypothesen zum Bewegungszustand (BZ A, BZ B) geprüft werden können während in einem Normalbetrieb nur ein Bewegungszustand (BZ A, BZ B) verwendet wird.

3. Verfahren nach einem der Ansprüche 1 oder 2,
   **dadurch gekennzeichnet, dass** eine Eigenbewegung des Fahrzeugs (22) durch eine Fahrzeugpose (u, u') beschrieben und an die Objektverfolgungs-Einheit (17) übermittelt wird.

4. Verfahren nach Anspruch 3,
   **dadurch gekennzeichnet, dass** in der Objektverfolgungs-Einheit (17) aus den berechneten Hypothesen über die Fahrzeugpose (u, u') und einer vorher berechneten Objektposition (25, 26) eines Objektes oder mehreren vorher berechneten Objektpositionen (25, 26) von Objekten eine neue Objektposition (25, 26) dieses Objektes oder die neuen Objektpositionen (25, 26) der Objekte in fahrzeugfesten Koordinaten vorhergesagt werden.

5. Verfahren nach einem der Ansprüche 1 bis 4,
   **dadurch gekennzeichnet, dass** die durch eine Umfeldsensorik des Fahrzeugs (22) gemessene Objektposition (25, 26) eines oder mehrerer Objekte mit den über mittels der Kalmanfilter (13, 14) bestimmten Eigenbewegungs-Hypothesen des Fahrzeugs (22) vorhergesagten Objektpositionen (25, 26) verglichen werden, wobei solche Eigenbewegungs-Hypothesen als falsch detektiert werden, deren zugehörige Abweichung zwischen vorhergesagter und gemessener Objektposition (25, 26) einen Schwellwert überschreitet.

6. Verfahren nach einem der Ansprüche 1 bis 5,
   **dadurch gekennzeichnet, dass** im Falle einer Fehlfunktion (F) in einer der Inertialmesseinheiten (4, 5), wenn die Fehlfunktion (F) durch Vergleich mit einem redundanten Sensor der anderen der Inertialmesseinheiten (4, 5) erkannt wurde und die mit einem fehlerhaften Sensorwert berechnete Eigenbewegungs-Hypothese als fehlerhaft zurückgewiesen wurde, auf die andere der Inertialmesseinheiten (4, 5) umgeschaltet wird.

7. Verfahren nach einem der Ansprüche 1 bis 6,
   **dadurch gekennzeichnet, dass** die Ergebnisse der Überwachung der beiden Inertialmesseinheiten (4, 5) in eine Fehlerdetektion der Objektverfolgungs-Einheit (17) einbezogen werden, wobei in diesem Fall nur dann auf eine Fehlfunktion (F) erkannt wird, wenn die Abweichung der prädizierten Objektposition (25, 26) für eine der Hypothesen eine Schwelle überschreitet, für die andere jedoch nicht, und gleichzeitig ein Fehler über den Sensorvergleich einer IMU-Fehlerdetektionseinheit (16) erkannt wurde.

8. Verfahren nach einem der Ansprüche 1 bis 7,
**dadurch gekennzeichnet, dass** in die Fehlerdetektion nur ein als ortsfest erkanntes Objekt oder mehrere als ortsfest erkannte Objekte einbezogen werden und eine Fehlfunktion (F) für die Hypothese erkannt wird, bei der sich die prädizierte Objektposition (25, 26) stark verändert, während sie für die andere Hypothese örtlich konstant bleibt.

**Claims**

1. Method for detecting malfunctions (F) in inertial measuring units (4, 5) used in a vehicle (22) for measuring angular velocities $(\vec{\omega}_A, \vec{\omega}_B)$ and specific forces $(\vec{f}_A, \vec{f}_B)$, two inertial measuring units (4, 5) being used that each have a plurality of sensors, comprising accelerometers and gyroscopic sensors,
a first inertial measuring unit (4) being used as the master inertial measuring unit, a second inertial measuring unit (5), of which the performance capabilities may be lower than those of the first inertial measuring unit (4), being used as the slave inertial measuring unit, measurements of the master inertial measuring unit (4) being used as reference values in order to compensate for measurements of the slave inertial measuring unit (5) by estimating error model parameters compared with the master inertial measuring unit (4), in order to detect a malfunction (F) on the basis of two corresponding sensor signals of the two inertial measuring units (4, 5) by comparison, **characterized in that** of the two inertial measuring units (4, 5), the inertial measuring unit of which the motion estimation, calculated in a particular downstream Kalman filter (13, 14), leads in an object tracking unit (17) to an incorrect prediction of the calculated positions of objects in the surroundings of the vehicle (22) is detected as faulty.

2. Method according to claim 1,
**characterized in that** an error state is transmitted from a monitoring unit (12), to which sensor values of the inertial measuring units (4, 5) are supplied, to the object tracking unit (17), so that in the event of a malfunction (F) a plurality of hypotheses regarding the movement state (BZ A, BZ B) can be tested, while in normal operation only one movement state (BZ A, BZ B) is used.

3. Method according to either claim 1 or claim 2,
**characterized in that** a proper motion of the vehicle (22) is described by a vehicle pose (u, u') and transmitted to the object tracking unit (17).

4. Method according to claim 3,
**characterized in that** in the object tracking unit (17), a new object position (25, 26) of an object or new object positions (25, 26) of objects in vehicle-fixed coordinates are predicted from the calculated hypotheses about the vehicle pose (u, u') and a previously calculated object position (25, 26) of this object or a plurality of previously calculated object positions (25, 26) of the objects.

5. Method according to any of claims 1 to 4,
**characterized in that** the object position (25, 26) of one or more objects measured by an environment sensor system of the vehicle (22) is compared with the object positions (25, 26) predicted via proper-motion hypotheses of the vehicle (22) determined by means of the Kalman filters (13, 14), proper-motion hypotheses of which the associated deviation between the predicted and measured object position (25, 26) exceeds a threshold value being detected as false.

6. Method according to any of claims 1 to 5,
**characterized in that** in the event of a malfunction (F) in one of the inertial measuring units (4, 5), if the malfunction (F) was detected by comparison with a redundant sensor of the other of the inertial measuring units (4, 5) and the proper-motion hypothesis calculated with a faulty sensor value was rejected as faulty, a switch is made to the other of the inertial measuring units (4, 5).

7. Method according to any of claims 1 to 6,
**characterized in that** the results of the monitoring of the two inertial measuring units (4, 5) are included in an error detection of the object tracking unit (17), in this case a malfunction (F) being detected only if the deviation of the predicted object position (25, 26) exceeds a threshold for one of the hypotheses but not for the other, and at the same time an error was detected via the sensor comparison of an IMU error detection unit (16).

8. Method according to any of claims 1 to 7,

EP 4 423 458 B1

**characterized in that** only one object recognized as stationary or a plurality of objects recognized as stationary are included in the error detection and a malfunction (F) is detected for the hypothesis in which the predicted object position (25, 26) changes significantly, while it remains spatially constant for the other hypothesis.

**Revendications**

1. Procédé de détection de dysfonctionnements (F) dans des unités de mesure inertielles (4, 5) qui sont utilisées dans un véhicule (22) pour mesurer des vitesses angulaires ($\vec{\omega}_A$, $\vec{\omega}_B$) et des forces spécifiques ($\vec{f}_A$, $\vec{f}_B$), dans lequel deux unités de mesure inertielles (4, 5), comportant respectivement plusieurs capteurs, comprenant des accéléromètres et des capteurs gyroscopiques, sont utilisées,
   dans lequel une première unité de mesure inertielle (4) est utilisée comme unité de mesure inertielle maître, dans lequel une seconde unité de mesure inertielle (5), dont les capacités de puissance peuvent être inférieures à celles de la première unité de mesure inertielle (4), est utilisée comme unité de mesure inertielle esclave, dans lequel des mesures de l'unité de mesure inertielle maître (4) sont utilisées comme valeurs de référence pour compenser des mesures de l'unité de mesure inertielle esclave (5) par rapport à l'unité de mesure inertielle maître (4) par l'intermédiaire de l'estimation de paramètres de modèle d'erreur, pour détecter par comparaison un dysfonctionnement (F) sur la base de respectivement deux signaux de capteur correspondants des deux unités de mesure inertielle (4, 5), **caractérisé en ce que** celle des deux unités de mesure inertielle (4, 5) qui est reconnue comme défectueuse est celle dont l'estimation de mouvement calculée dans un filtre de Kalman (13, 14) respectivement monté en aval conduit dans une unité de poursuite d'objet (17) à une prédiction erronée des positions calculées d'objets dans l'environnement du véhicule (22).

2. Procédé selon la revendication 1,
   **caractérisé en ce qu'**un état d'erreur est transmis à l'unité de poursuite d'objet (17) à partir d'une unité de surveillance (12) à laquelle des valeurs de capteur des unités de mesure inertielle (4, 5) sont fournies, de sorte que dans le cas d'un dysfonctionnement (F), plusieurs hypothèses concernant l'état de mouvement (BZ A, BZ B) peuvent être vérifiées alors que dans un fonctionnement normal, seul un état de mouvement (BZ A, BZ B) est utilisé.

3. Procédé selon l'une des revendications 1 ou 2,
   **caractérisé en ce qu'**un mouvement propre du véhicule (22) est décrit par une pose de véhicule (u, u') et transmis à l'unité de poursuite d'objet (17).

4. Procédé selon la revendication 3,
   **caractérisé en ce que,** dans l'unité de poursuite d'objet (17), à partir des hypothèses calculées concernant la pose de véhicule (u, u') et d'une position d'objet (25, 26) calculée au préalable d'un objet ou de plusieurs positions d'objet (25, 26) calculées au préalable d'objets, une nouvelle position d'objet (25, 26) de cet objet ou les nouvelles positions d'objet (25, 26) des objets sont prédites en coordonnées fixes par rapport au véhicule.

5. Procédé selon l'une des revendications 1 à 4,
   **caractérisé en ce que** la position d'objet (25, 26) d'un ou de plusieurs objets, mesurée par un système de capteurs d'environnement du véhicule (22), est comparée aux positions d'objet (25, 26) prédites par l'intermédiaire d'hypothèses de mouvement propre du véhicule (22) déterminées au moyen des filtres de Kalman (13, 14), dans lequel de telles hypothèses de mouvement propre, dont l'écart associé entre la position d'objet (25, 26) prédite et mesurée dépasse une valeur seuil, sont reconnues comme étant fausses.

6. Procédé selon l'une des revendications 1 à 5,
   **caractérisé en ce que,** en cas d'un dysfonctionnement (F) dans l'une des unités de mesure inertielle (4, 5), si le dysfonctionnement (F) a été détecté par comparaison avec un capteur redondant de l'autre des unités de mesure inertielle (4, 5) et si l'hypothèse de mouvement propre calculée avec une valeur de capteur défectueuse a été rejetée comme étant défectueuse, on commute sur l'autre des unités de mesure inertielle (4, 5).

7. Procédé selon l'une des revendications 1 à 6,
   **caractérisé en ce que** les résultats de la surveillance des deux unités de mesure inertielle (4, 5) sont inclus dans une détection d'erreur de l'unité de poursuite d'objet (17), dans lequel dans ce cas un dysfonctionnement (F) n'est détecté que si l'écart de la position d'objet (25, 26) prédite dépasse un seuil pour l'une des hypothèses, mais pas pour l'autre, et en même temps une erreur a été détectée par l'intermédiaire de la comparaison de capteurs d'une unité de détection d'erreur IMU (16).

13

8. Procédé selon l'une des revendications 1 à 7,
**caractérisé en ce qu'**un seul objet détecté comme fixe ou plusieurs objets détectés comme fixes sont inclus dans la détection d'erreur et un dysfonctionnement (F) est détecté pour l'hypothèse dans laquelle la position d'objet (25, 26) prédite varie fortement, alors qu'elle reste localement constante pour l'autre hypothèse.

FIG 1
Stand der Technik

FIG 2

FIG 3

FIG 4A

FIG 4B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102021004103 A1, Kalkkuhl, J. ; Bergmann, M. ; Engelhardt, T. ; Bleimund, F. :
- US 10553044 B2, Mercep, L. ; Pollach, M.
- US 11145146 B2, Mercep, L. ; Pollach, M.
- US 2020159224 A1, Brian K. Rupnik ; Brian T. Whitehead

**In der Beschreibung aufgeführte Nicht-Patentliteratur**

- **BERMAN, Z.** Outliers Rejection in Kalman Filtering-Some New Observations. *IEEE/ION Position, Location and Navigation Symposium - PLANS*, 2014, 1008-1013 9
- **GREWAL, M. S.** ; **ADREWS, A. P.** Kalman Filtering. John Wiley, 2001, vol. 9
- **GROVES, P. D.** Principles of GNSS, Inertial and Multisensor integrated Navigation systems. *Artech House*, 2013, vol. 9
- **KLIER, W.** ; **REIM, A.** ; **STAPEL, D.** Robust Estimation of Vehicle Sideslip Angle - An Approach w/o Vehicle and Tire Models. *SAE Technical Paper Series*, 2008 (2008)
- **RABE, C.** Detection of Moving Objects by Spatio-Temporal Motion Analysis. *Christian-Albrechts-Universität Kiel, Diss.*, 2011, vol. 7
- **WENDEL, J.** Integrierte Navigationssysteme. *Oldenbourg*, 2007
- Localization for Autonomous Driving. **WOO, A.** ; **FIDAN, B.** ; **MELEK, W. W.** Handbook of Position Localization. IEEE Press Wiley, vol. 29, 7